# FASCICULE DE BREVET EUROPEEN

(11) **EP 1 040 266 B1**
(45) Date de publication et mention de la délivrance du brevet: **28.04.2004**
(21) Numéro de dépôt: 98962476.2
(22) Date de dépôt: 16.12.1998
(51) Int. Cl.: F02M 25/07, F16K 31/528

(54) **VANNE DE CONTROLE POUR SYSTEME DE RECIRCULATION DES GAZ D'ECHAPPEMENT D'UN MOTEUR A COMBUSTION INTERNE**
ABGASRÜCKFÜHRVENTIL FÜR EINE BRENNKRAFTMASCHINE
CONTROL VALVE FOR RECIRCULATION SYSTEM OF AN INTERNAL COMBUSTION ENGINE EXHAUST GASES

(30) Priorité: 16.12.1997 FR 9715916
(43) Date de publication de la demande: 04.10.2000
(73) Titulaire: Johnson Controls Automotive Electronics, 95520 Osny (FR)
(72) Inventeur: HERITIER-BEST, Pierre, F-63500 Orbeil (FR)
(74) Mandataire: Bloch, Gérard
(86) Numéro de dépôt international: PCT/FR1998/002746
(87) Numéro de publication internationale: WO 1999/031372

(56) Documents cités:
- DE-A- 19 520 871
- DE-C- 19 603 592
- FR-A- 2 724 976
- FR-A- 2 748 780
- US-A- 5 606 957
- PATENT ABSTRACTS OF JAPAN vol. 008, no. 083 (M-290), 17 avril 1984 & JP 59 001889 A (MIKUNI KOGYO KK), 7 janvier 1984
- PATENT ABSTRACTS OF JAPAN vol. 096, no. 010, 31 octobre 1996 & JP 08 145220 A (SANYO ELECTRIC CO LTD), 7 juin 1996

## Description

La présente invention concerne une vanne de contrôle de la quantité de gaz d'échappement recyclés dans un système de recirculation des gaz d'un moteur à combustion interne.

On connaît déjà des systèmes de recirculation des gaz d'échappement (EGR) destinés, dans les moteurs à combustion interne, à recycler une partie des gaz d'échappement à l'admission dans les cylindres. Un tel recyclage de gaz généralement inertes et ne participant donc pas à la combustion, permet d'abaisser la température de combustion, ce qui a pour effet de diminuer le taux des oxydes d'azote (NOx) présents dans les gaz d'échappement et, par conséquent, de limiter la pollution occasionnée par un tel moteur.

Toutefois, pour que le moteur fonctionne de manière satisfaisante, une telle recirculation ne doit intervenir que dans des conditions de fonctionnement normal du moteur et, par conséquent, être interrompue dans toutes les circonstances non nominales, à savoir, pour l'essentiel, à froid, sous forte charge, au ralenti et à grande vitesse. Dans ces derniers cas, aucune recirculation n'est permise alors que, en fonctionnement normal, une recirculation de jusqu'à 50% en poids des gaz admis est permise. Une régulation est donc nécessaire.

Il était connu d'obtenir une telle régulation en disposant dans le circuit de recirculation une vanne à pointeau dans laquelle la position de ce dernier était commandée par une membrane soumise à une dépression plus ou moins importante. La source de dépression résidait dans la tubulure d'admission ou résultait d'une pompe à vide, une vanne à solénoïde étant disposée entre cette tubulure et la vanne à pointeau et à membrane. Le solénoïde lui-même était alimenté en courant haché dont le rapport cyclique était déterminé par un calculateur auquel était fourni en entrée la température du liquide de refroidissement, la charge et la vitesse de rotation du moteur.

Compte tenu des inconvénients liés dans ces dispositifs aux contre-pressions cycliques régnant en aval de la vanne à pointeau et ayant tendance à ouvrir cette dernière, on a proposé dans le document FR-A-2.748.780, une vanne de contrôle de la quantité de gaz d'échappement recyclés dans un système de recirculation des gaz d'échappement d'un moteur à combustion interne, comprenant une soupape d'obturation disposée dans un conduit, des moyens d'actionnement rotatifs, et une came pour entraîner, à partir desdits moyens d'actionnement rotatifs, ladite soupape d'obturation de sa position fermée à une position ouverte.

Plus particulièrement, le document précité décrit une telle vanne dans laquelle la came comporte une première pièce sensiblement cylindrique solidaire de l'organe d'obturation et bloquée en rotation, sur laquelle sont formées des rainures hélicoïdales agencées pour coopérer avec des billes disposées dans des alvéoles d'une deuxième pièce solidaire des moyens d'actionnement rotatifs et bloquée en translation.

Bien que donnant généralement satisfaction, une telle vanne présente certains inconvénients.

En premier lieu, les contacts ponctuels des billes peuvent provoquer une usure prématurée du dispositif.

Par ailleurs, le montage industriel des billes nécessite des opérations délicates et, par conséquent, coûteuses.

La présente invention vise à pallier ces inconvénients.

A cet effet, l'invention a pour objet une vanne de contrôle de la quantité des gaz d'échappement recyclés dans un système de recirculation des gaz d'échappement d'un moteur à combustion interne, comprenant une soupape d'obturation disposée dans un conduit, des moyens d'actionnement rotatifs et une came pour entraîner, à partir desdits moyens d'entraînement rotatifs, ladite soupape d'obturation de sa position fermée à une position ouverte et inversement, caractérisée par le fait qu'elle comprend un palonnier solidaire en rotation de l'arbre de sortie des moyens d'actionnement rotatif, un axe transversal, solidaire en translation de la soupape d'obturation mais libre en rotation par rapport à elle et solidaire en rotation dudit palonnier, et des rainures hélicoïdales de guidage fixes dans lesquelles sont engagées les extrémités dudit axe transversal.

L'invention permet par conséquent de supprimer les billes de l'art antérieur, tout en conservant la même souplesse de conception due aux pistes hélicoïdales dont le profit peut être choisi à volonté. En effet, lorsque l'axe transversal est entraîné en rotation par le moteur, ses extrémités suivent les rainures hélicoïdales, provoquant ainsi un mouvement de translation qui est communiqué à la soupape d'obturation. Celle-ci adopte donc une position axiale fonction de l'angle de rotation des moyens d'entraînement rotatifs.

Dans un mode de réalisation particulier de l'invention, les deux extrémités du palonnier forment des fourchettes entre les dents desquelles sont engagées les extrémités de l'axe transversal.

Ces fourchettes permettent d'entraîner avec précision l'axe transversal en rotation, tout en lui donnant toute liberté de mouvement axial.

Egalement dans un mode de réalisation particulier, les rainures hélicoïdales sont formées dans les parois latérales d'une pièce cylindrique réalisée en deux parties, chacune de ces parties formant une rampe, les rampes en vis à vis des deux parties formant lesdites rainures.

Cet agencement permet un assemblage aisé de l'axe transversal avec les éléments dans lesquels sont formées les rainures, ainsi qu'un moulage simplifié de ces éléments à l'aide de simples moules en deux parties.

On décrira maintenant, à titre d'exemple non limitatif, un mode de réalisation particulier de l'invention, en référence aux dessins schématiques annexés dans lesquels:
- la figure 1 est une vue en coupe axiale d'une vanne selon l'invention; et

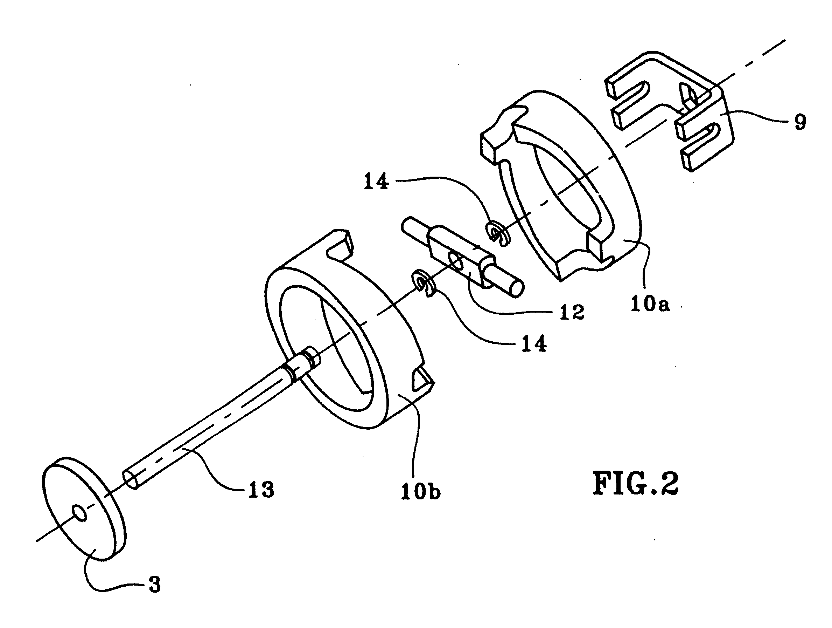

- la figure 2 est une vue en perspective éclatée des éléments essentiels de cette vanne.

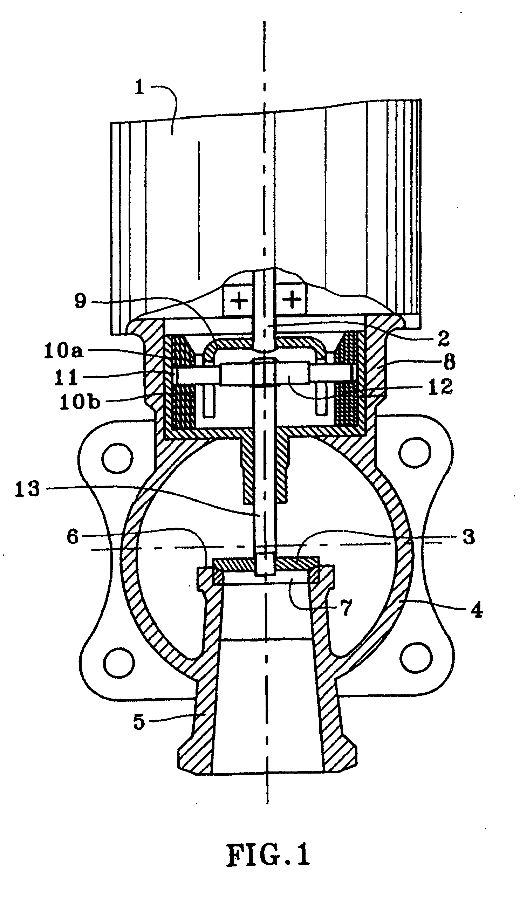

La vanne représentée à la figure 1 comprend pour l'essentiel un moteur électrique 1 dont l'arbre de sortie rotatif 2 est agencé pour commander la position axiale d'une soupape 3. Cette position axiale permet de déterminer la valeur d'un débit de gaz entre un premier conduit 4 cylindrique, de section relativement importante, et un deuxième conduit 5 sensiblement cylindrique, de diamètre moins important et dont l'axe est généralement perpendiculaire à l'axe du conduit cylindrique 4.

Les deux conduits sont ici réalisés d'une seule pièce. L'extrémité 6 du conduit 5 intérieure au conduit cylindrique 4 supporte un siège de soupape 7 pour former une étanchéité avec la tête de soupape 3.

La pièce constituée par les conduits 4 et 5 se prolonge à l'opposé du conduit 5 par un logement 8, débouchant dans le conduit 4 pour recevoir le mécanisme d'actionnement de la soupape 3. Le logement 8 est lui-même prolongé par un boîtier recevant le moteur 1 précité.

Le logement 8 reçoit en premier lieu un palonnier 9, fixe en translation axiale et solidaire en rotation de l'arbre de sortie 2 du moteur 1. Ce palonnier est constitué par une pièce en forme de U dont les deux branches sont en forme de fourchette. Le logement 8 reçoit également, co-axialement à lui, deux pièces 10a et 10b cylindriques qui, assemblées, délimitent deux rainures hélicoïdales 11.

Un axe transversal 12 est solidaire de la tige 13 de la soupape 3. Les extrémités de l'axe 12 sont engagées d'une part dans les fourchettes d'extrémité du palonnier 9 et, d'autre part, dans les rainures hélicoïdales 11.

Enfin, l'axe transversal 12 est monté dans le cas présent sur la tige de soupape 13, à l'aide de deux clips 14 permettant une libre rotation de la tige 13 par rapport à l'axe 12.

La vanne qui vient d'être décrite fonctionne de la manière suivante.

Une rotation de l'arbre de sortie 2 du moteur 1 entraîne une rotation équivalente du palonnier 9. Cette dernière provoque également la rotation autour de l'axe du dispositif de l'arbre transversal 12. Ce dernier n'étant pas lié en translation axiale mais ayant ses extrémités engagées dans les rainures 11, se déplace en translation en réponse à ces mouvements de rotation.

Dans ce mouvement de translation axiale, l'arbre transversal 12 provoque un déplacement axial de la tête de soupape 3 et par conséquent, un réglage du débit de la vanne.

Comme dans le document de l'art antérieur, les rainures 11 peuvent ne pas être hélicoïdales au sens strict mathématique du terme, de sorte que la levée de la soupape n'est pas obligatoirement proportionnelle à l'angle de rotation du moteur, mais peut être ajustée à volonté par une conformation appropriée des rainures.

## Revendications

1. Vanne de contrôle de la quantité de gaz d'échappement recyclés dans un système de recirculation des gaz d'échappement d'un moteur à combustion interne, comprenant une soupape d'obturation (3) disposée dans un conduit, des moyens d'actionnement rotatifs (1) et une came (11) pour entraîner, à partir desdits moyens d'entraînement rotatifs, ladite soupape d'obturation de sa position fermée à.une position ouverte et inversement, **caractérisée par le fait qu'**elle comprend un palonnier (9) solidaire en rotation de l'arbre de sortie (2) des moyens d'actionnement rotatif, un axe transversal (12), solidaire en translation de la soupape d'obturation mais libre en rotation par rapport à elle et solidaire en rotation dudit palonnier, et des rainures hélicoïdales de guidage fixes (11) dans lesquelles sont engagées les extrémités dudit axe transversal.

2. Vanne de contrôle selon la revendication 1, dans laquelle les deux extrémités du palonnier forment des fourchettes entre les dents desquelles sont engagées les extrémités de l'axe transversal.

3. Vanne de contrôle selon l'une quelconque des revendications 1 et 2, dans laquelle les rainures hélicoïdales sont formées dans les parois latérales d'une pièce cylindrique réalisée en deux parties (10a, 10b), chacune de ces parties formant une rampe, les rampes en vis à vis des deux parties formant lesdites rainures.

## Patentansprüche

1. Ventil zur Kontrolle der Menge vom rückführenden Abgaz in einer Abgasrückführanlage für eine Brennkraftmaschine umfassend ein in einem Kanal angeordnetes Schließventil (3), rotative Antriebsmittel (1) und eine Steuerkurve (11) zum Antrieb, ausgehend von besagten rotativen Antriebsmitteln, von besagtem Schließventil von seiner geschlossenen Position zu einer offenen Position und umgekehrt, **dadurch gekennzeichnet dass** es einen mit der Ausgangswelle (2) der rotativen Antriebsmittel drehfest verbundenen Mitnehmer (9), eine mit dem Schließventil translativ verbundene, jedoch gegenüber diesem frei drehbare sowie drehfest mit dem Mitnehmer verbundene Tranversalachse und wendelförmige, feststehende Führungsnuten (11) aufweist, wobei die Enden der Transversalachse mit den Führungsnuten zusammenwirkend sind.

2. Kontrollventil nach dem Anspruch 1, bei welchem die beiden Enden des Mitnehmers Gabeln ausbilden zwischen deren Zinken die Enden der Transversalachse angeordnet sind.

3. Kontrollventil nach einem der Ansprüche 1 oder 2, bei welchem die wendelförmigen Führungsnuten in den seitlichen Wänden eines aus zwei Teilen (10a, 10b) hergestellten Zylindertelis vorgesehen sind, wobei jedes dieser Teile jeweils eine Führungsrampe bildet, wobei die gegenüberliegenden Führungsrampen der beiden Teile die besagten Führungsnuten bilden.

## Claims

1. Valve for controlling the quantity of exhaust gases recycled in an exhaust gas recirculation system of an internal combustion engine, comprising a blanking valve (3) disposed in a duct, rotary actuation means (1) and a cam (11) to drive, from the said rotary actuation means, the said blanking valve from its closed position to an open position and vice versa, **characterized in that** it comprises a crossbar (9) secured in rotation to the output shaft (2) of the rotary actuation means, a transverse axis (12) secured in translation to the blanking valve but free to rotate in relation to it and secured in rotation to the said crossbar, and helicoidal fixed guide grooves (11) in which the extremities of the said transverse axis are engaged.

2. Control valve according to Claim 1, in which the two extremities of the crossbar form forks between the teeth of which the extremities of the transverse axis are engaged.

3. Control valve according to either of Claims 1 and 2, in which the helicoidal grooves are formed in the lateral walls of a cylindrical part produced in two portions (10a, 10b), each of these portions forming an inclined ramp, the mutually facing inclined ramps of the two portions forming the said grooves.
